# EUROPÄISCHE PATENTSCHRIFT

(11) **EP 2 097 198 B1**
(45) Veröffentlichungstag und Bekanntmachung des Hinweises auf die Patenterteilung: **18.05.2011**
(21) Anmeldenummer: 07786173.0
(22) Anmeldetag: 19.07.2007
(51) Int. Cl.: B23B 27/14, B23B 51/04, B23C 5/22

(54) **SCHNEIDEINSATZ, INSBESONDERE FÜR AUFBOHR- UND/ODER SENKOPERATIONEN**
CUTTING INSERT, IN PARTICULAR FOR COUNTERBORING AND/OR COUNTERSINKING OPERATIONS
ÉLÉMENT COUPANT RAPPORTÉ, NOTAMMENT POUR OPÉRATIONS D'ALÉSAGE ET/OU DE CHANFREINAGE

(30) Priorität: 21.12.2006 DE 102006060664
(43) Veröffentlichungstag der Anmeldung: 09.09.2009
(73) Patentinhaber: Kennametal Inc., Latrobe, PA 15650-0231 (US)
(72) Erfinder: MERGENTHALER, Peter, Karl, 91477 Markt Bibart (DE)
(74) Vertreter: FDST Patentanwälte
(86) Internationale Anmeldenummer: PCT/EP2007/006401
(87) Internationale Veröffentlichungsnummer: WO 2008/083725

(56) Entgegenhaltungen:
- WO-A-2004/024381
- JP-A- 2002 052 415
- US-A1- 2006 045 636

## Beschreibung

Die Erfindung betrifft einen Schneideinsatz, insbesondere für Aufbohr- und/oder Senkoperationen, gemäß dem Oberbegriff des Anspruchs 1. Sie bezieht sich weiter auf einen Schneidenträger zur Aufnahme mindestens eines solchen Schneideinsatzes. Ein derartiger Schneideinsatz für ein Bohrwerkzeug ist beispielsweise aus der WO 2004/024381 A2 bekannt.

Aus der WO 2004/056518 A2 (PCT/DE2003/004274) ist zudem ein Tieflochbohrer mit einem Schneidenträger bekannt, der für einen vorbestimmten Nenndurchmesserbereich eingesetzt wird. Dem Tieflochbohrer sind ein auswechselbarer Schneideinsatz und mindestens eine auswechselbare Führungsleiste zugeordnet. Während der eigentliche Schneidvorgang mittels einer Schneide des an den Schneidenträger angeschraubten Schneideinsatzes erfolgt, wird das Werkzeug beim Bohrvorgang von den entsprechenden Führungsleisten im Bohrloch über seinen Umfang abgestützt. Der bekannte Tieflochbohrer eignet sich für Durchmesserwerte ab 16mm bis ca. 40mm. Für vergleichsweise kleine Bohrdurchmesser ist der bekannte Tieflochbohrer nicht geeignet.

Der Erfindung liegt die Aufgabe zugrunde, einen insbesondere für Aufbohr- bzw. Senkoperationen besonders geeigneten Schneideinsatz anzugeben. Der Schneideinsatz, sowie insbesondere ein diesen aufnehmender Schneidenträger, soll auch für vergleichsweise kleine Bohrdurchmesser geeignet sein.

Diese Aufgabe wird bezüglich des Schneideinsatzes erfindungsgemäß gelöst durch die Merkmale des Anspruchs 1. Vorteilhafte Ausgestaltungen und Weiterbildungen sind Gegenstand der Unteransprüche.

Dazu weist der Schneideinsatz bzw. dessen Grund- oder Schneidkörper eine Oberseite und eine dieser beabstandet gegenüberliegende Unterseite auf. Im Einsatz ist die Oberseite des Schneideinsatzes einer Bohrungswand zugeordnet, während die Unterseite als Auflagefläche an einem Schneidenträger dient, der seinerseits Bestandteil eines Bohr- oder Aufbohrwerkzeuges ist.

Der Schneideinsatz weist zwei einander gegenüberliegende Schmalseiten und zwei einander gegenüberliegende Längsseiten auf. Zwischen einer Längsseite und einer Schmalseite ist eine Schneidkante gebildet, die sich praktisch annähernd über die gesamte Schneidkörperdicke erstreckt. Die Schneidkante verläuft ausgehend von der Oberseite zur Unterseite hin schräg. Unter Bezugnahme auf eine z-Richtung, in der sich die Schneidkörperdicke erstreckt, und einer x-Richtung, die sich entlang der Längsseite des Schneideinsatzes erstreckt, sowie einer y-Richtung, die sich entlang der Schmalseite erstreckt, verläuft die Schneidkante gegenüber einer durch die x-Richtung und die z-Richtung aufgespannten Ebene unter einem Neigungswinkel zur jeweils gegenüberliegenden Längsseite des Schneidkörpers hin schräg. Dieser Neigungswinkel beträgt geeigneterweise zwischen 10° und 30°, bevorzugt etwa 20°.

Die Schneidkante verläuft vorzugsweise auch gegenüber einer durch die y-Richtung und die z-Richtung aufgespannten Ebene geneigt. Geeigneterweise weist der Schneideinsatz zwei derartige Schneidkanten auf, die einander diagonal gegenüberliegend angeordnet sind. Hierbei ist bevorzugt ein spitzer Winkel zwischen der jeweiligen Schmalseite und der Unterseite gebildet, der zweckmäßigerweise ungefähr gleich 50° ist. Alternativ kann für eine Plansenkung, insbesondere für eine 90°-Plansenkung, auch ein stumpfer Winkel von beispielsweise 95° zwischen der jeweiligen Schmalseite und der Unterseite gebildet sein.

In besonders bevorzugter Weiterbildung weist der Schneideinsatz mindestens eine der Schneidkante zugeordnete Abstützfläche auf, die während der spanabhebenden Bearbeitung eines Werkstückes mittels des Schneideinsatzes der von diesem selbst erzeugten Bohrungswand zugewandt ist. Mittels dieser, bezogen auf einen Schnittkreis des Schneideinsatzes negativen Abstützfläche stützt sich der Schneideinsatz bzw. der diesen tragende Schneidenträger an der Bohrungswand ab. Die vorteilhafterweise in den Schneideinsatz bzw. in den Schneidkörper integrierten Abstützflächen ermöglichen somit die gewünschte Abstützfunktion, ohne dass zusätzliche Führungselemente bereitzustellen sind. Aufgrund der Integration dieser Abstützfunktion in den Schneidkörper selbst wird bei gleichzeitig besonders raumsparender Geometrie des Schneideinsatzes und des diesen aufnehmenden Schneidenträgers ein hohe Funktionalität erreicht. Bei dieser Variante des Schneideinsatzes verläuft die Schneidkante ausgehend von der geneigten Abstützfläche wiederum entlang der gesamten verbleibenden Schneidkörperdicke.

In der der Schneidkante zugewandten Längsseite ist eine Spanfläche vorgesehen. Diese, zweckmäßigerweise als in den Schneidkörper eingezogene Spannut ausgeführte Spanfläche verläuft entlang der sich zwischen der Oberseite und der Unterseite des Schneidkörpers bzw. Schneideinsatzes erstreckenden Schneidkante. Bei der Variante des Schneideinsatzes mit integrierten Abstützflächen verläuft die Schneidkante wiederum ausgehend von der geneigten Abstützfläche entlang der gesamten verbleibenden Schneidkörperdicke.

Ein besonders bevorzugter Schneidenträger zur Aufnahme mindestens eines solchen Schneideinsatzes weist einen in Trägerlängsrichtung an eine Spannut angrenzenden oder zwischen zwei Spannuten verlaufenden Trägerrücken auf, auf dem der Schneidkörper lösbar gehalten ist. Der Schneideinsatz ist hierbei tangential angeordnet, wobei die für die Bearbeitung jeweils im Einsatz befindliche Schneidkante bezogen auf den Schnittkreis des Schneiden- oder Werkzeugträgers etwa radial verläuft. Der Schneideinsatz ist dabei bevorzugt über der Mitte angeordnet, d.h. dass die von der x-Richtung und von der z-Richtung aufgespannte und die Schmalseite in der Seitenmitte schneidende Mittelebene des Schneideinsatzes zumindest geringfügig oberhalb der entsprechenden xz-Mittelebene des Schneidenträgers liegt. Somit weist die der jeweiligen Schneidkante zugeordnete Abstützfläche zum Schnittkreis und somit im Einsatz des Schneidenträgers zur Bohrungswand einen geringeren Abstand auf, als die gegenüberliegende, der anderen Schneidkante zugeordnete Abstützfläche. Aufgrund des durch die Abstützfläche gebildeten negativen Winkels ist ein ausreichend geringer Freigang bei gleichzeitig zuverlässiger Abstützung des Schneideinsatzes an der Bohrlochwandung sichergestellt.

Für die Halterung und Positionierung des Schneideinsatzes am Schneidenträger weist dieser eine keilförmige Schneidkörperaufnahme mit einer ersten Anlagefläche auf, auf der der Schneideinsatz mit dessen Unterseite aufliegt. An einer zweiten Anlagefläche der keilförmigen Schneidkörperaufnahme liegt der Schneideinsatz mit derjenigen Schmalseite an, die mit der entsprechenden Längsseite die nicht im Einsatz befindliche Schneidkante bildet. Die Fixierung des Schneideinsatzes am Schneidenträger erfolgt zweckmäßigerweise mittels einer lösbaren Schraubverbindung, wozu der Schneideinsatz eine zentrale Durchgangsöffnung für eine entsprechende Befestigungsschraube aufweist.

Die mit der Erfindung erzielten Vorteile bestehen insbesondere darin, dass durch die erfindungsgemäße Geometrie des Schneideinsatzes mit zwischen je einer Längsseite und einer Schmalseite gebildeter und zu einer zentralen Symmetrieebene hin geneigter Schneidkante einerseits eine tangentiale Anordnung oder Positionierung des Schneideinsatzes an einem zugeordneten Schneidenträger realisiert werden kann. Hierdurch wiederum können Aufbohr- und Senkoperationen zur Herstellung besonders kleiner Bohrungsdurchmesser, insbesondere kleiner als 10mm, z. B. größer oder gleich 8 mm, realisiert werden. Die Integration der bezogen auf einen Schnittkreis bzw. die zu bearbeitende Bohrungswand negative geneigten oder orientierten Abstützfunktion in den Schneideinsatz selbst ermöglicht eine besonders einfache Handhabung beim Lösen des Schneideinsatzes und bei dessen Befestigung in bestimmungsgemäß tangentialer Positionierung am Schneidkörper.

Nachfolgend werden Ausführungsbeispiele der Erfindung anhand einer Zeichnung näher erläutert. Darin zeigen:
- Fig. 1: in perspektivischer Darstellung einen erfindungsgemäßen Schneideinsatz mit zwischen einer Längsseite und einer Schmalseite schräg verlaufender Schneidkante,
- Fig. 2: den Schneideinsatz gemäß Fig. 1 in einer Draufsicht,
- Fig. 3: den Schneideinsatz in einer Seitenansicht auf eine Längsseite,
- Fig. 4: den Schneideinsatz in einer Seitenansicht auf eine Schmalseite,
- Fig. 5: in perspektivischer Darstellung einen Schneidenträger eines Bohr- werkzeugs mit einem erfindungsgemäßen Schneideinsatz, und
- Fig. 6: einen Querschnitt des Schneidenträgers mit einem Schnittkreis des Schneideinsatzes.

Entsprechende Teile sind in allen Figuren mit den gleichen Bezugszeichen versehen.

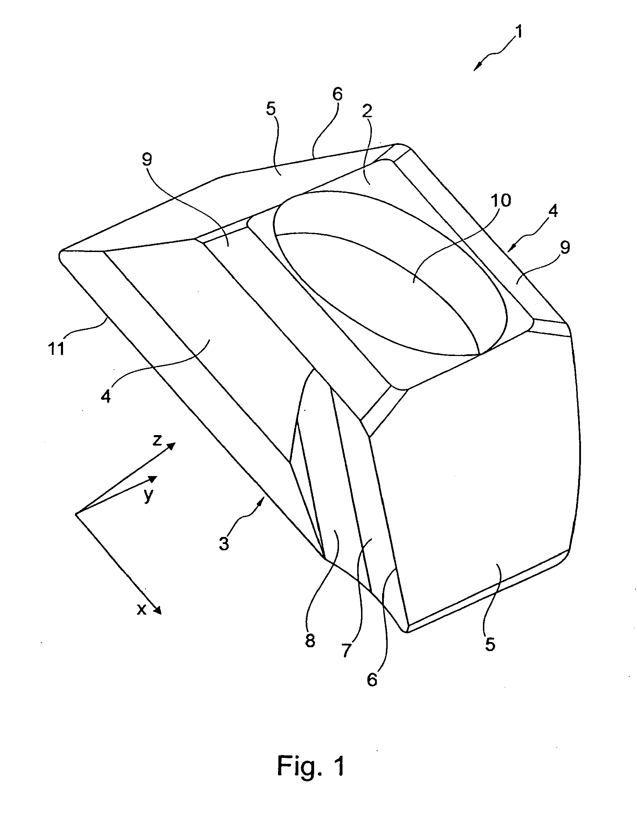

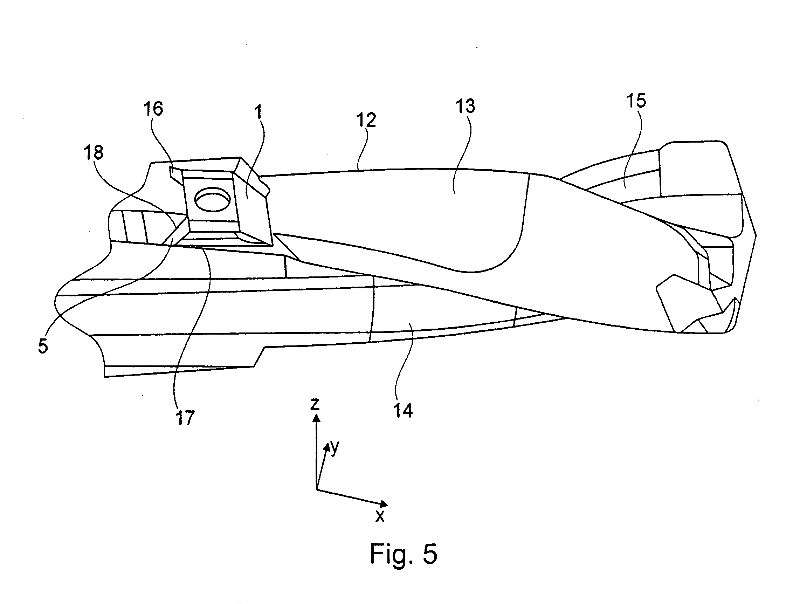

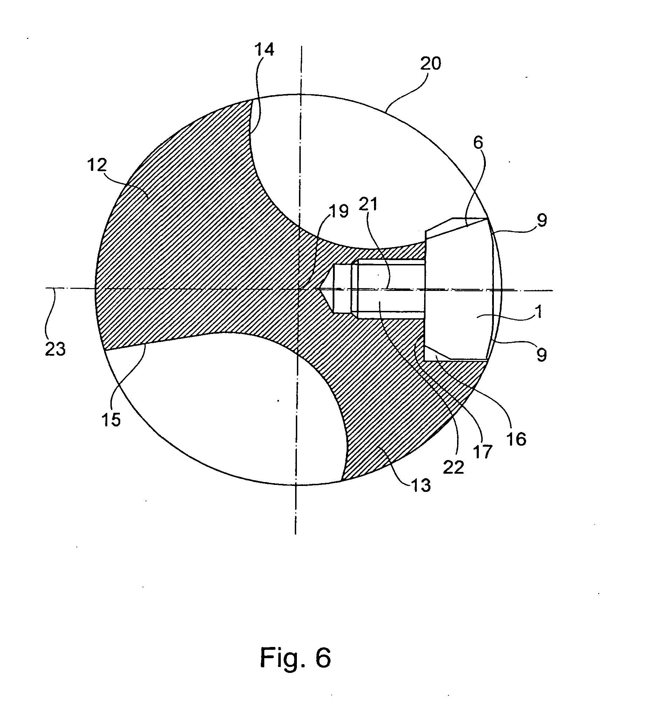

Der in den Figuren 1 bis 4 dargestellte Schneidkörper 1 dient als Schneideinsatz in Verbindung mit einem in den Figuren 5 und 6 im Ausschnitt bzw. in einem Querschnitt dargestellten Schneidenträger für Aufbohr- und/oder Senkoperationen und insbesondere zur Herstellung von Bohrungsdurchmessern kleiner als z. B. 10mm.

Der Schneidkörper 1 weist zwischen dessen Oberseite 2 und dessen Unterseite 3 zwei einander gegenüberliegende Längsseiten 4 und zwei einander gegenüberliegende Schmalseiten 5 auf. Zwischen einer Längsseite 4 und einer Schmalseite 5 ist eine Schneidkante 6 gebildet. Der dargestellte Schneidkörper 1 weist zwei solche Schneidkanten 6 an diagonal gegenüberliegenden Seitenkanten auf. An die jeweilige Schneidkante 6 schließt sich eine Spanfläche 7 an. Ausgehend von der Schneidkante 6 verläuft die Spanfläche 7 entlang eines Teils der Längsseite 4 und ist hierbei unter Bildung eines Spanflächenrückens 8 als in den Schneidkörper 1 eingezogene, etwa L-förmige Spannut ausgebildet.

An der Oberseite 2 des Schneidkörpers 1 sind zwei einander gegenüberliegende Abstütz- oder Anlageflächen 9 vorgesehen, die entlang der jeweiligen Längsseite 4 verlaufen und zu diesen hin unter einem negativen Winkel α geneigt sind. Dieser Winkel oder Neigungswinkel α beträgt etwa 20°. Zwischen den beiden Abstützflächen 9 durchsetzt eine in z-Richtung orientierte Bohrungsöffnung 10 den Schneidkörper 1.

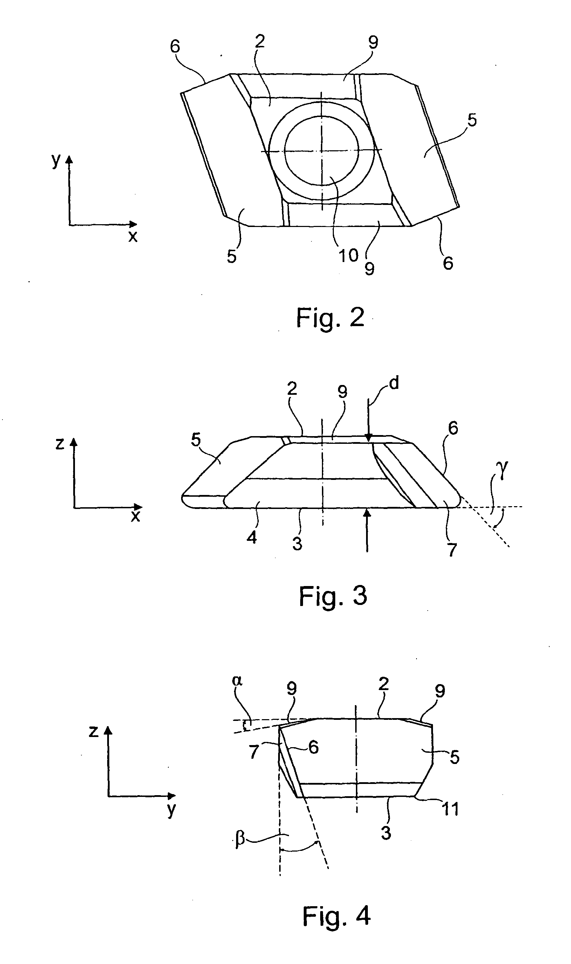

Wie insbesondere aus den Fig. 1 und 3 ersichtlich ist, erstreckt sich die jeweilige Schneidkante 6 ausgehend von der jeweiligen Abstützfläche 9 über die gesamte, bezogen auf das dargestellte Koordinatensystem in z-Richtung verlaufende Schneidkörperdicke d. Zudem verläuft die Schneidkante 6 gegenüber der entlang der Längsseite 4 verlaufenden x-Richtung und der z-Richtung aufgespannten xz-Ebene schräg, wie aus Fig. 4 vergleichsweise deutlich ersichtlich ist. Die sich an die jeweilige Schneidkante 6 anschließende Spanfläche 7 erstreckt sich somit ebenfalls über praktisch die gesamte Schneidkörperdicke d. Die Neigung der jeweiligen Schneidkante 6 mit dem Neigungswinkel β ist ausgehend von der Oberseite 2 zur zwischen der Unterseite 3 und der gegenüberliegenden Längsseite 4 gebildeten Schneidkörperkante 11 hin orientiert. Der Neigungswinkel β beträgt zweckmäßigerweise etwa 20°.

Wie aus Fig. 3 vergleichsweise deutlich ersichtlich ist, verlaufen die Schmalseiten 5 gegenüber der durch die y-Richtung und die z-Richtung aufgespannten yz-Ebene schräg. Dabei schließen die Schmalseiten 5 mit der Unterseite 3 einen spitzen Winkel γ ein. Dieser Winkel oder Neigungswinkel γ beträgt zweckmäßigerweise etwa 50°.

Der Schneidkörper 1 ist in der durch die x-Richtung und die y-Richtung aufgespannten xy-Ebene, d. h. mit Blick auf die Oberseite 2 oder die Unterseite 3 in der Art eines Parallelogramms geformt. Mit Blick auf die Längsseite 4 und somit in der durch die x-Richtung und die z-Richtung aufgespannten xz-Ebene ist der Schneidkörper 1 etwa trapezförmig.

Fig. 5 zeigt einen Schneidenträger 12 mit tangential angeordnetem Schneideinsatz bzw. Schneidkörper 1. Dieser ist auf einem Trägerrücken 13 des Schneidenträgers 12 angeordnet und liegt hierzu mit der als Auflagefläche dienenden Unterseite 3 auf dem Trägerrücken 13 auf. Der Trägerrücken 13 selbst ist zwischen zwei spiralförmigen Spannuten 14,15 des Schneidenträgers 12 gebildet. Hierzu weist der Schneidenträger 12 am Schneidenrücken 13 eine keilförmige Ausnehmung 16 auf. Diese wiederum bildet eine erste Anlagefläche 17, auf der der Schneideinsatz 1 mit dessen Unterseite 3 aufliegt. An einer zweiten, zur ersten Anlagefläche 17 schräg verlaufenden Anlagefläche 18 liegt der Schneideinsatz 1 mit derjenigen Schmalseite 5 an, die nicht die im Einsatz befindliche Schneidkante 6 bildet.

Aus dem in Fig. 6 dargestellten Querschnitt des Schneidenträgers 12 ist ersichtlich, dass die im Einsatz befindliche Schneidkante 6 radial in Richtung der Trägermitte oder des Trägermittelpunktes 19 verläuft. Anhand des eingezeichneten Schnittkreises 20 des Schneideinsatzes 1 ist erkennbar, dass sich der Schneideinsatz 1 mit dessen der im Einsatz befindlichen Schneidkante 6 zugeordneten Abstützfläche 9 nahezu abstandslos an eine durch den Schnittkreis 20 repräsentierte Bohrungswand eines zu bearbeitenden Werkstückes anlegt. Hierdurch erfolgt eine zuverlässige Abstützung des Schneideinsatzes 1 sowie des diesen aufnehmenden Schneidenträgers 12 gegen die Bohrungswand.

Ersichtlich ist zudem, dass die gegenüberliegende Abstützfläche 9 einen vergleichsweise großen Abstand zum Schnittkreis 20 einnimmt. Grund hierfür ist, dass der mittels einer Befestigungsschraube 22 am Schneidenträger 12 lösbar gehaltene Schneideinsatz 1 bzw. dessen Mittellinie 21 geringfügig über der Mitte, d. h. über der zur Mittellinie 21 des Scheideinsatzes 1 parallel verlaufenden Mittellinie 23 des Schneidenträgers 12 und des Schnittkreises 20 angeordnet ist. Hierdurch ist bei gleichzeitig geeigneter Abstützfunktion ein ausreichender Freigang des Schneideinsatzes 1 hergestellt.

Aufgrund der besonders raumsparenden Geometrie des Schneideinsatzes 1 ist dessen Einbaumaß entsprechend gering, was die tangentiale Anordnung oder Positionierung des Schneidenträgers 1 am Schneidenträger 12 ermöglicht. Dies wiederum führt zur Verringerung des Schneidkörperdurchmessers, so dass in einfacher sowie zuverlässiger Art und Weise Bohrungsdurchmesser kleiner als 16mm, insbesondere größer oder gleich 8mm, hergestellt werden können.

## Patentansprüche

1. Schneideinsatz (1), insbesondere für Aufbohr- und/oder Senkoperationen, mit einer Oberseite (2) und mit einer Unterseite (3), die der Oberseite (2) im Abstand der in eine z-Richtung verlaufenden Schneidkörperdicke (d) unter Bildung von zwei in eine x-Richtung verlaufenden Längsseiten (4) und zwei in eine y-Richtung verlaufenden Schmalseiten (5) gegenüber liegt, sowie mit mindestens einer zwischen einer Längsseite (4) und einer Schmalseite (5) gebildeten Schneidkante (6), die sich über annähernd die gesamte Schneidkörperdicke (d) erstreck,
**dadurch gekennzeichnet,**
- **dass** zwei diagonal gegenüberliegende Schneidkanten (6) vorgesehen sind,
- **dass** die Schneidkanten (6) zur Unterseite (3) hin schräg verlaufen,
- **dass** in der der jeweiligen Schneidkante (6) zugewandten Längsseite (4) eine zwischen der Oberseite (2) und der Unterseite (3) verlaufende Spanfläche (7) vorgesehen ist, und
- **dass** zwischen der Oberseite (2) und der jeweiligen Längsseite (4) eine zur Unterseite (3) hin geneigte Abstützfläche (9) vorgesehen ist, wobei der Neigungswinkel α vorzugsweise etwa 20° beträgt.

2. Schneideinsatz (1) nach Anspruch 1,
**dadurch gekennzeichnet,**
**dass** die Schmalseite (5) gegenüber einer durch die x-Richtung und die z-Richtung aufgespannten Ebene unter einem Neigungswinkel (β), der vorzugsweise ungefähr gleich 20° ist, schräg verläuft.

3. Schneideinsatz (1) nach Anspruch 2,
**dadurch gekennzeichnet,**
**dass** die Schneidkante (6) zur gegenüberliegenden Längsseite (4) hin schräg verläuft.

4. Schneideinsatz (1) nach einem der Ansprüche 1 bis 3,
**dadurch gekennzeichnet,**
**dass** die Schneidkante (6) unter Bildung eines spitzen Winkels (χ) zwischen der Schmalseite (5) mit der Unterseite (3) geneigt ist, wobei der Neigungswinkel (χ) vorzugsweise ungefähr gleich 50° ist.

5. Schneideinsatz (1) nach einem der Ansprüche 1 bis 4,
**dadurch gekennzeichnet,**
**dass** die Spanfläche (7) als in den Schneidkörper eingezogene Spannut ausgebildet ist.

6. Schneideinsatz (1) nach einem der Ansprüche 1 bis 5,
**gekennzeichnet durch**
eine sich in z-Richtung erstreckende Durchgangsöffnung (10) im Schneidkörper zur Aufnahme einer Befestigungsschraube (22).

7. Schneidenträger (12), insbesondere eines Bohrwerkzeugs, mit mindestens einem tangential angeordneten Schneideinsatz (1) nach einem der Ansprüche 1 bis 6.

8. Schneidenträger (12) nach Anspruch 7, mit einem in Trägerlängsrichtung (x) verlaufenden Trägerrücken (13), auf dem der Schneidkörper (1) lösbar gehalten ist.

9. Schneidenträger (12) nach Anspruch 8 oder 9, mit einer keilförmigen Schneidkörperaufnahme (16) mit einer ersten Anlagefläche (17), auf der Schneideinsatz (1) mit dessen Unterseite (3) aufliegt, und mit einer zweiten Anlagefläche (18), an der der Schneideinsatz (1) mit dessen Schmalseite (5) anliegt.

10. Schneidenträger (12) nach einem der Ansprüche 8 bis 10, wobei die im Einsatz befindliche Schneidkante (6) radial in Richtung des Trägermittelpunktes (19) verläuft.

## Claims

1. Cutting insert (1), in particular for boring and/or counterboring operations, comprising a top side (2) and comprising an underside (3) which is opposite the underside (2) at the distance of the cutting body thickness (d) running in a z direction, while two longitudinal sides (4) which run in an x direction and two narrow sides (5) which run in a y direction are formed, and comprising at least one cutting edge (6) which is formed between a longitudinal side (4) and a narrow side (5) and which extends over approximately the entire cutting body thickness (d),
**characterized**
- **in that** two diagonally opposite cutting edges (6) are provided,
- **in that** the cutting edges (6) run obliquely toward the underside (3),
- **in that** a rake face (7) running between the top side (2) and the underside (3) is provided in the longitudinal side (4) facing the respective cutting edge (6), and
- **in that** a supporting surface (9) inclined toward the underside (3) is provided between the top side (2) and the respective longitudinal side (4), the inclination angle α preferably being about 20°.

2. Cutting insert (1) according to Claim 1, **characterized in that** the narrow side (5) runs obliquely at an inclination angle (β), which is preferably approximately equal to 20°, relative to a plane defined by the x direction and the z direction.

3. Cutting insert (1) according to Claim 2, **characterized in that** the cutting edge (6) runs obliquely toward the opposite longitudinal side (4).

4. Cutting insert (1) according to one of Claims 1 to 3, **characterized in that** the cutting edge (6) is inclined while forming an acute angle (χ) between the narrow side (5) and the underside (3), the inclination angle (χ) preferably being approximately equal to 50°.

5. Cutting insert (1) according to one of Claims 1 to 4, **characterized in that** the rake face (7) is designed as a flute drawn into the cutting body.

6. Cutting insert (1) according to one of Claims 1 to 5, **characterized by** a through-hole (10) extending in the z direction in the cutting body for accommodating a fastening screw (22).

7. Insert holder (12), in particular of a drilling tool, having at least one tangentially arranged cutting insert (1) according to one of Claims 1 to 6.

8. Insert holder (12) according to Claim 7, having a holder land (13) which runs in the holder longitudinal direction (x) and on which the cutting body (1) is detachably held.

9. Insert holder (12) according to Claim 7 or 8, comprising a wedge-shaped cutting body receptacle (16) having a first bearing surface (17), on which the cutting insert (1) rests with its underside (3), and having a second bearing surface (18), against which the cutting insert (1) bears with its narrow side (5).

10. Insert holder (12) according to one of Claims 7 to 9, wherein the cutting edge (6) which is in use runs radially in the direction of the holder center point (19).

## Revendications

1. Insert de coupe (1), en particulier pour des opérations d'alésage et/ou de chanfreinage, comprenant un côté supérieur (2) et un côté inférieur (3) qui est en regard du côté supérieur (2) à distance de l'épaisseur du corps de coupe (d) s'étendant dans une direction z, en formant deux côtés longitudinaux (4) s'étendant dans une direction x et deux côtés étroits (5) s'étendant dans une direction y, et comprenant au moins une arête de coupe (6) formée entre un côté longitudinal (4) et un côté étroit (5), laquelle s'étend sur approximativement toute l'épaisseur du corps de coupe (d),
**caractérisé en ce que**
- deux arêtes de coupe (6) diagonalement opposées sont prévues,
- les arêtes de coupe (6) s'étendent obliquement vers le côté inférieur (3),
- une surface d'enlèvement de copeaux (7) s'étendant entre le côté supérieur (2) et le côté inférieur (3) est prévue dans le côté longitudinal (4) tourné vers l'arête de coupe respective (6), et
- une surface d'appui (9) inclinée vers le côté inférieur (3) est prévue entre le côté supérieur (2) et le côté longitudinal respectif (4), l'angle d'inclinaison (α) valant de préférence approximativement 20°.

2. Insert de coupe (1) selon la revendication 1,
**caractérisé en ce que**
le côté étroit (5) s'étend obliquement par rapport à un plan tendu par la direction x et la direction z, suivant un angle d'inclinaison (β) qui est de préférence approximativement égal à 20°.

3. Insert de coupe (1) selon la revendication 2,
**caractérisé en ce que**
l'arête de coupe (6) s'étend obliquement vers le côté longitudinal opposé (4).

4. Insert de coupe (1) selon l'une quelconque des revendications 1 à 3,
**caractérisé en ce que**
l'arête de coupe (6) est inclinée en formant un angle aigu (χ) entre le côté étroit (5) et le côté inférieur (3), l'angle d'inclinaison (χ) étant de préférence approximativement égal à 50°.

5. Insert de coupe (1) selon l'une quelconque des revendications 1 à 4,
**caractérisé en ce que**
la surface d'enlèvement de copeaux (7) est réalisée sous forme de rainure d'enlèvement de copeaux pratiquée dans le corps de coupe.

6. Insert de coupe (1) selon l'une quelconque des revendications 1 à 5,
**caractérisé par**
une ouverture de passage (10) s'étendant dans la direction z dans le corps de coupe pour recevoir une vis de fixation (22).

7. Support de coupe (12), en particulier d'un outil d'alésage, comprenant au moins un insert de coupe (1) disposé tangentiellement selon l'une quelconque des revendications 1 à 6.

8. Support de coupe (12) selon la revendication 7, comprenant un dos de support (13) s'étendant dans la direction longitudinale du support (x), sur lequel le corps de coupe (1) est maintenu de manière détachable.

9. Support de coupe (12) selon la revendication 8 ou 9, comprenant un logement de corps de coupe (16) en forme de coin, avec une première surface d'appui (17), sur laquelle l'insert de coupe (1) repose avec son côté inférieur (3), et avec une deuxième surface d'appui (18) sur laquelle l'insert de coupe (1) s'applique avec son côté étroit (5).

10. Support de coupe (12) selon l'une quelconque des revendications 8 à 10, dans lequel l'arête de coupe (6) se trouvant dans l'insert s'étend radialement dans la direction du centre du support (19).
